# FASCICULE DE BREVET EUROPEEN

(11) **EP 1 339 998 B1**
(45) Date de publication et mention de la délivrance du brevet: **29.08.2007**
(21) Numéro de dépôt: 01925657.7
(22) Date de dépôt: 13.04.2001
(51) Int. Cl.: F16D 59/02

(54) **FREIN A DISQUE, EN PARTICULIER POUR USAGE INDUSTRIEL**
SCHEIBENBREMSE, INSBESONDERE FÜR INDUSTRIEGEBRAUCH
DISC BRAKE, IN PARTICULAR FOR INDUSTRIAL USE

(30) Priorité: 19.04.2000 FR 0005042
(43) Date de publication de la demande: 03.09.2003
(73) Titulaire: Sime-Stromag, 18150 La Guerche-sur-l'Aubois (FR)
(72) Inventeur: DUFOUR, Gérard, F-18600 Sancoins (FR); CARNEAU, Laurent, F-18150 La Guerche-sur-l'Aubois (FR); EON, Christian, F-58640 Coulanges les Nevers (FR)
(74) Mandataire: Santarelli
(86) Numéro de dépôt international: PCT/FR2001/001160
(87) Numéro de publication internationale: WO 2001/079720

(56) Documents cités:
- EP-A- 0 074 734
- EP-A- 0 718 168
- US-A- 4 548 301
- US-A- 4 867 283
- US-A- 5 921 356

## Description

La présente invention concerne d'une manière générale les freins à disque, en particulier pour usage industriel, du genre comportant, en association avec le disque à freiner, au moins un patin de freinage et un bloc de commande constitué d'un cylindre dans lequel est monté coulissant un piston adapté à appliquer le patin de freinage sur le disque pour freinage de celui-ci.

Le bloc de commande comprend généralement, d'une part, des moyens de serrage constitués par des moyens élastiques déplaçant axialement le patin de freinage en direction du disque et, d'autre part, des moyens de desserrage, par exemple hydrauliques ou magnétiques, pour maintenir normalement le patin à distance du disque ; de tels freins à disque peuvent ainsi constituer des freins de sécurité et trouvent plus particulièrement leur emploi dans l'industrie, par exemple pour l'équipement de ponts roulants, treuils, transporteurs, convoyeurs ou autres.

Les moyens élastiques qui constituent les moyens de serrage sont tarés nominalement en sorte d'assurer le couple de freinage requis ; or, comme on le sait, un patin de freinage porte une garniture de friction qui est amenée à s'user au contact du disque ; dès lors, l'épaisseur de la garniture diminue et les moyens élastiques "s'allongent", ce qui modifie, dans le sens d'une diminution, l'effort de freinage qu'ils sont capables d'assurer : une telle conséquence nuit à la sécurité d'un tel frein.

Pour pallier ces inconvénients, on a proposé, dans le document US-A-5 921 356, un frein à disque du type ci-dessus dans lequel le piston est en deux pièces, une première pièce dite de commande et une seconde pièce dite d'application destinée à coopérer directement avec le patin de freinage, les deux pièces étant attelées l'une à l'autre par l'intermédiaire d'un dispositif de rattrapage du jeu dû à l'usure du patin de freinage, dit ci-après dispositif de rattrapage, lequel comprend une tige munie de dents périphériques coopérant avec des gorges périphériques complémentaires ménagées à l'intérieur d'une noix radialement élastique, la noix étant attelée axialement à l'une des deux pièces, de commande ou d'application, et la tige attelée axialement à l'autre des deux pièces.

La présente invention a pour but de proposer un frein à disque de ce genre dans lequel le dispositif de rattrapage fonctionne de manière plus fiable.

Selon l'invention, un frein à disque du genre ci-dessus est caractérisé par le fait que la noix est constituée d'au moins deux secteurs serrés élastiquement sur la tige, le serrage élastique étant obtenu par au moins un jonc élastique entourant la noix.

Avantageusement, au jonc élastique est associé un anneau élastique dit de sécurité retenant les secteurs en contact avec la vis en sorte que la noix peut transmettre l'effort des moyens élastiques mais ne résiste pas au recul du piston.

De préférence, la noix est disposée axialement entre deux portées de butée axiale que présente la pièce à laquelle la noix est attelée, lesdites portées de butée étant inclinées par rapport à l'axe de la tige et de la noix.

Avantageusement, lesdites portées sont inclinées d'un angle voisin de 15 degrés

De préférence, les faces d'extrémités axiales de la noix, par laquelle ladite noix coopère avec lesdites portées de butée axiale, sont également inclinées par rapport à l'axe de la tige, notamment d'un angle voisin de 15 degrés.

Avantageusement, la tige est attelée axialement à l'autre pièce au moins dans le sens dit de serrage du frein grâce à un épaulement transversal qu'elle présente.

Avantageusement, la tige est attelée axialement à l'autre pièce au moins dans le sens dit de serrage par l'intermédiaire d'une portée sphérique.

De préférence, la concavité de la portée sphérique est tournée vers le disque.

De préférence, la tige est attelée axialement dans les deux sens.

Avantageusement, les dents de la tige, et les gorges de la noix, ont en coupe une forme dissymétrique, les flancs dits d'attaque étant moins inclinés sur l'axe que les flancs dits de retour.

De préférence, les flancs d'attaque sont inclinés d'un angle de l'ordre de 2 degrés.

Avantageusement, les flancs de retour sont inclinés d'un angle voisin de 45 degrés.

De préférence, les dents de la tige et les gorges de la noix sont obtenues par filetage et taraudage, respectivement.

Avantageusement, la noix est attelée axialement à la pièce de commande et la tige à la pièce d'application.

De préférence, la tige porte à serrage une bague dite d'arrêt dont le débattement axial est limité dans les deux sens par rapport au cylindre du bloc de commande.

Avantageusement, le cylindre du bloc de commande est porté par un support fixe ; deux patins de freinage sont prévus, disposés de part et d'autre du disque et à chaque patin de freinage est associé un bloc de commande.

En variante, le cylindre du bloc de commande est porté par un étrier chevauchant le disque et monté flottant par rapport à un support fixe, l'étrier étant adapté à appliquer un second patin de freinage sur le disque du côté opposé au cylindre de commande.

De préférence, un dispositif dit de recentrage est prévu entre l'étrier et le support fixe ; le dispositif de recentrage comprend une bague montée à serrage dans un alésage prévu dans l'une des pièces support fixe-étrier, ladite bague étant montée avec jeu axial entre deux butées solidaires de l'autre pièce ; un ressort prenant appui sur le support fixe sollicite l'étrier dans le sens du desserrage du second patin de freinage.

Pour mieux faire comprendre l'objet de l'invention, on va en décrire maintenant, à titre d'exemple, purement illustratif et non limitatif, un mode de réalisation représenté sur les dessins annexés.

Sur ces dessins :
- la figure 1 est une demi-vue en coupe partielle selon I-I de la figure 2, d'un frein à disque selon l'invention ;
- la figure 2 est une demi-vue de dessus par rapport à la figure 1, partiellement en coupe ;
- les figures 3 à 5 représentent la noix du dispositif de rattrapage de jeu du frein des figures 1 et 2, la figure 3 étant une vue en élévation, associée à une bulle III montrant le détail des gorges périphériques, la figure 4 étant une vue selon la flèche IV de la figure 3, et la figure 5 une coupe selon V-V de la figure 4 après rotation de 90 degrés ;
- la figure 6 est une vue en coupe de l'une des portées de butée axiale.

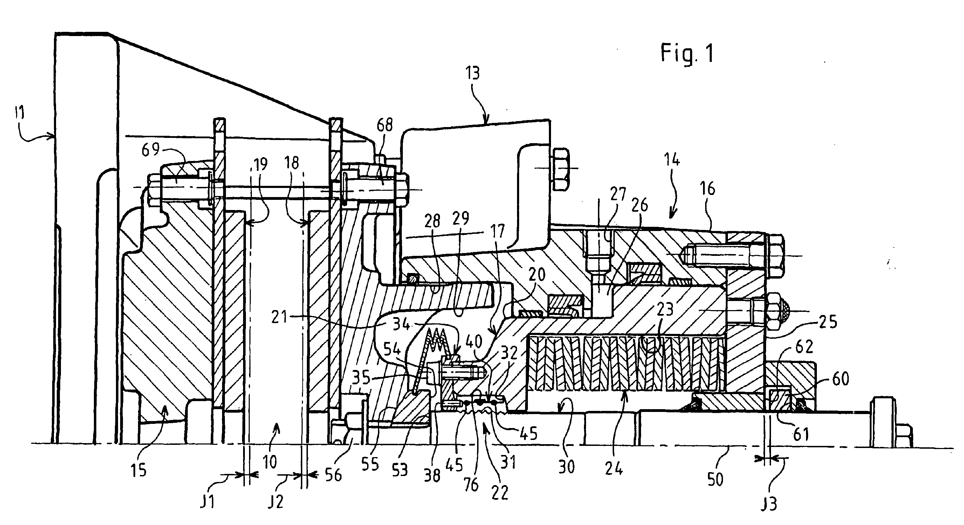

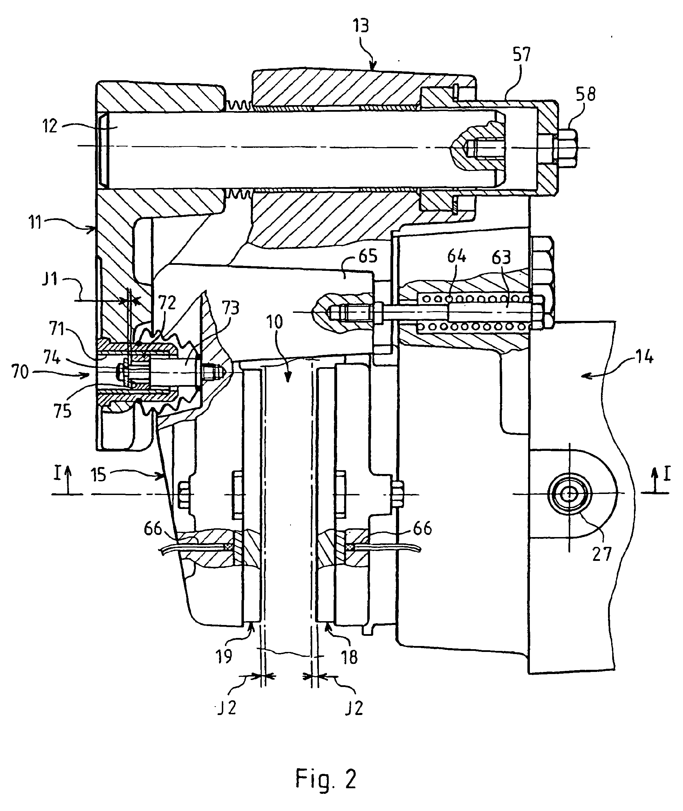

En se reportant aux figures 1 et 2, on voit un frein à disque associé à un disque 10 à freiner schématisé en traits mixtes.

Ici, le frein à disque est du type à étrier flottant.

Plus précisément, au droit du disque 10, un support fixe 11 porte une colonne 12 cylindrique qui s'étend parallèlement à l'axe du disque 10 qu'elle surplombe ; sur cette colonne 12 est monté coulissant un étrier 13.

L'étrier 13 est en forme de U et chevauche le disque 10 ; il porte, d'un côté du disque 10, un bloc de commande 14 et, de l'autre côté, une aile 15.

Le bloc de commande 14 est constitué d'un cylindre 16 dans lequel est monté coulissant un piston 17.

Le piston 17 est associé à un patin de freinage 18 dans les conditions décrites ci-dessous ; l'aile 15 de l'étrier est également associée à un patin de freinage 19 ; l'ensemble est agencé en sorte que le disque 10 peut être pincé entre les deux patins de freinage 18, 19 et donc être freiné.

Selon l'invention, le piston 17 est en deux pièces 20, 21, à savoir une première pièce 20 dite de commande parce que soumise directement aux efforts de serrage ou de desserrage, et une seconde pièce 21 dite d'application parce que transmettant aux patins de freinage 18, 19 lesdits efforts de serrage ou de desserrage, les première et seconde pièces 20, 21 étant attelées l'une à l'autre par l'intermédiaire d'un dispositif de rattrapage 22 du jeu dû à l'usure des patins de freinage 18, 19.

La pièce de commande 20 du piston 17 est munie d'un alésage central 23 borgne, ouvert du côté opposé au disque 10, dans lequel sont disposés axialement des moyens élastiques 24 qui prennent appui, d'un côté sur le fond dudit alésage 23 et, de l'autre côté, sur le fond du cylindre 16, ici un couvercle 25, lesquels moyens élastiques 24, constitués dans l'exemple représenté par un empilement de rondelles type Belleville, sollicitent la pièce de commande 20 en direction du disque 10.

Pour s'opposer à l'effort dû aux moyens élastiques 24, le cylindre 16 et la pièce de commande 20 sont étagés en sorte qu'est définie une chambre annulaire 26 de mise en pression, ici du type hydraulique ; on voit en 27 un orifice taraudé permettant le raccordement de la chambre annulaire 26 à une source de pression.

Ainsi, en mettant sous pression la chambre 26, on surmonte l'action des moyens élastiques 24 qui serrent le frein normalement, et on desserre celui-ci.

Du côté opposé au couvercle 25, le cylindre 16 est muni d'une portée cylindrique interne 28 qui reçoit une queue axiale 29 de la pièce d'application 21 pour guider celle-ci globalement axialement.

Le dispositif de rattrapage 22 comprend une tige 30 et une noix 40.

La tige 30 traverse axialement la pièce de commande 20 et le couvercle 25 du cylindre 16.

La tige 30 porte extérieurement une rangée axiale de dents 31 périphériques pouvant être avantageusement obtenues sous la forme d'un filet hélicoïdal réalisé à la périphérie de la tige 30.

Les dents 31 de la tige 30 sont adaptées à coopérer en engagement avec des gorges périphériques complémentaires que comporte intérieurement une noix 40 entourant la tige 30.

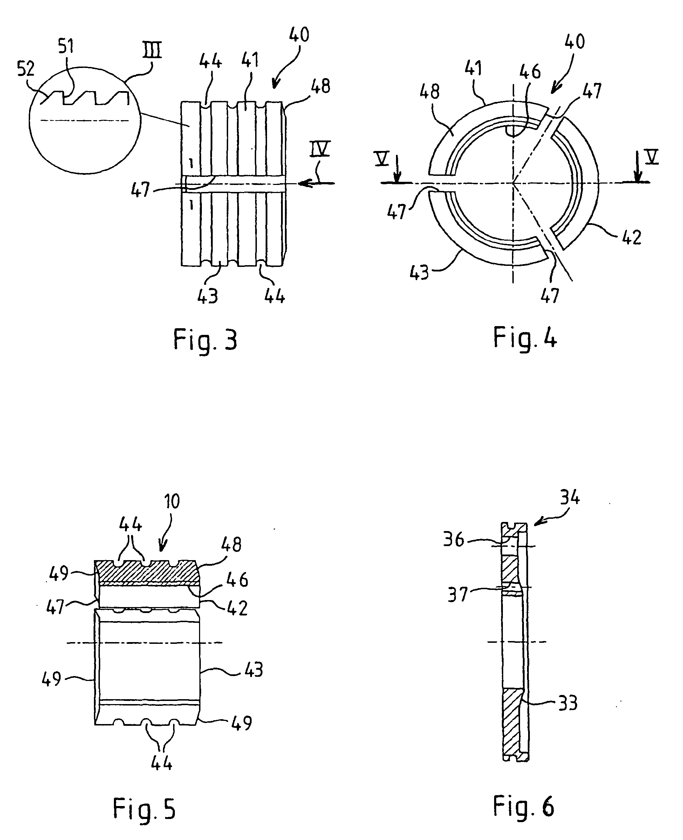

La noix 40, mieux visible sur les figures 3 à 5, est du type radialement élastique ; pour ce faire, ici la noix 40 est en trois secteurs 41, 42, 43 munis de saignées 44 périphériques adaptées à recevoir des joncs élastiques 45, figure 1, pour coiffer élastiquement les dents 31 de la tige 30 par les gorges périphériques de la noix 40 ; ici, les gorges périphériques 46 sont obtenues sous la forme d'un taraudage hélicoïdal, complémentaire du filetage 31, réalisé à l'intérieur de la noix 40.

La noix 40 est attelée axialement à la pièce de commande 20 du piston 17 ; ici, pour ce faire, la noix 40 est disposée axialement entre deux portées 32, 33 de butée axiale que présente la pièce de commande 20 ; l'une, 32, de ces portées de butée axiale est constituée par le fond d'un alésage ménagé centralement dans la partie avant, à savoir celle qui fait face au disque 10, de la pièce de commande 20, tandis que l'autre, 33, est ménagée sur la face arrière d'un anneau de butée 34, lequel est mieux visible sur la figure 6 ; l'anneau de butée 34 est fixé par des vis 35 en bout de la pièce de commande 20 du piston 17, grâce à des trous 36 qu'il présente ; d'autres trous 37, situés au droit des secteurs 41, 42, 43 de la noix 40, reçoivent des goupilles 38 dont l'extrémité prend place dans le jeu circonférentiel 47 qui sépare ces secteurs 41, 42, 43 en sorte qu'ainsi la noix 40 est empêchée de tourner par rapport à la pièce de commande 20.

Avantageusement, les portées de butée axiale 32, 33 sont inclinées par rapport à l'axe 50 commun à la tige 30, la noix 40 et le bloc de commande 14.

Ces portées, de révolution autour de l'axe 50, sont donc tronconiques, la grande base du tronc de cône étant située axialement du côté du disque 10 ; de bons résultats ont été obtenus avec des portées 32, 33 inclinées de 15 degrés sur l'axe 50.

La noix 40 est adaptée à coopérer avec ces portées de butée axiale 32, 33 par ses faces d'extrémité 48, 49, respectivement, qui sont avantageusement inclinées de la même façon, de manière complémentaire.

Ainsi, dans le sens du serrage, les moyens élastiques poussent la pièce de commande 20 axialement vers le disque 10, laquelle pousse dans le même sens la noix 40 par sa portée 32 via la face d'extrémité 48 de la noix 40 ; l'inclinaison de la portée 32 et de la face 48 conduit à une composante d'effort qui serre la noix 40 sur la tige 30 ; grâce aux gorges 46 de la noix 40 qui reçoivent les dents 31 de la tige 30, celle-ci est poussée par les moyens élastiques 24 vers le disque 10.

Comme le montre la loupe III de la figure 3, le profil des dents 31 et des gorges 46 est dissymétrique ; le flanc 51 dit d'attaque, parce que mis en oeuvre lors du serrage du frein, est très faiblement incliné sur l'axe 50, d'un angle de l'ordre de deux degrés, égal par exemple à un degré et demi, voir perpendiculaire à l'axe ; cette disposition permet de transmettre un effort axial important sans risque de dérapage ; le flanc 52 dit de retour, parce que mis en oeuvre lors du desserrage après usure des garnitures de friction équipant les patins de freinage 18 et 19, est davantage incliné sur l'axe 50, par exemple d'un angle de l'ordre de 45 degrés, pour permettre, lors du déplacement de la pièce de commande 20 dans le sens du desserrage, par mise sous pression de la chambre 26, et en combinaison avec la portée de butée axiale 33 et la face d'extrémité 49 qui coopèrent entre elles, une expansion radiale de la noix 40 qui peut alors sauter une dent 31, comme décrit ci-dessous, ladite expansion radiale étant favorisée par l'inclinaison, sur l'axe 50, de la portée de butée axiale 33.

Les pièces de commande 20 et d'application 21 sont attelées axialement ; ici, la tige 30 présente, dans sa partie avant, un épaulement transversal 53, réalisé à la faveur d'un changement de diamètre, susceptible d'agir axialement sur la pièce d'application 21 ; cette action peut être réalisée en direct ; ici, elle est réalisée par l'intermédiaire d'une bague dite de rotulage 54 qui agit sur la pièce d'application 21 selon une portée sphérique 55.

Dans la forme représentée, la tige 30 et la pièce d'application 21 sont liées rigidement l'une à l'autre grâce à une vis 56 ; mais ceci n'est pas obligatoire.

Selon une variante préférée, la tige 30 et la pièce d'application 21 ne sont pas liées rigidement mais en contact de butée axiale via la bague de rotulage 54 dont la portée sphérique est inverse de celle 55 représentée, la concavité de ladite portée sphérique étant tournée vers le disque 10 : grâce à cette disposition, on évite la création d'un couple de basculement des patins de freinage 18 et 19 dû à l'engagement des garnitures de friction et donc une usure en biais de celles-ci.

La tige 30 reçoit par ailleurs à frottement, ici dans sa partie arrière, une bague 60 dite d'arrêt dont le débattement axial est limité par rapport au cylindre 16 du bloc de commande 14, ici par deux butées transversales en regard dont l'une 61 est portée par une pièce rapportée sur le couvercle 25 et dont l'autre 62 est constituée par la face transversale externe dudit couvercle 25.

S'agissant du patin de freinage 19 placé du côté opposé au bloc de commande 14 par rapport au disque 10, l'aile 15 de l'étrier 13 porte un pion 73 en bout duquel est agencée une gorge dont les faces internes 74, 75 constituent deux butées transversales entre lesquelles est placée, avec jeu axial, une bague 72 montée, à serrage, coulissante dans un alésage 71 du support fixe 11.

Le support fixe 11 porte, en bout d'une aile 65 axiale qui surplombe le disque 10, un tirant 63 s'étendant axialement et muni d'une tête qui reçoit l'extrémité d'un ressort 64 dont l'autre extrémité est en appui sur l'étrier 13, l'agencement étant tel que l'étrier 13 est sollicité élastiquement, par rapport au support fixe 11, dans le sens du desserrage du second patin de freinage 19.

Le fonctionnement du frein à disque qui vient d'être décrit est le suivant.

Les figures 1 et 2 représentent le frein dans l'état desserré ; la chambre 26 est en pression ; les patins de freinage 19 et 18 sont à distance axiale, respectivement J1 et J2, du disque 10 à freiner ; la butée 74 du pion 73, porté par le second patin de freinage 19, est en appui sur la bague 72, laquelle est à une distance axiale de l'autre butée 75 égale à J1 ; la bague d'arrêt 60 portée par la tige 30 est en appui axial sur la portée 61 et à une distance de la portée 62 égale à J3, avec J3 = J1 + J2 ; le piston 17 est en appui sur le couvercle 25.

Pour le serrage du frein, la chambre 26 est mise hors pression ; les moyens élastiques 24 poussent le piston 17 vers le disque 10 et le cylindre 16 dans l'autre sens ; dès lors, le premier patin de freinage 18 est appliqué contre le disque 10 par le piston 17, via la noix 40, la tige 30 et la pièce d'application 21, tandis que le second patin de freinage 19 est appliqué contre le disque 10 par l'étrier 13, plus précisément par l'aile transversale 11 de l'étrier 13.

Les jeux J1, J2, J3 ayant été absorbés, la butée 75 est au contact de la bague 72, et la bague d'arrêt 60 au contact de la portée 62. Le ressort 64 a été légèrement comprimé.

S'il n'y a pas d'usure des patins de freinage 18 et 19, au desserrage on retrouve la position décrite ci-dessus, grâce à l'action du ressort 64 ; l'éloignement par rapport au disque 10 du piston 17 et de l'aile transversale 15 de l'étrier 13 conduit à l'éloignement des patins de freinage 18 et 19 qui leur sont fixés respectivement ici par des vis 68, 69 ; en variante, ils leur sont attelés élastiquement.

Lorsqu'il y a usure bien entendu sous charge, le piston 17 est déplacé plus à gauche, par rapport à la figure 1 et le cylindre 16 plus à droite ; ce mouvement relatif conduit à un déplacement de la bague d'arrêt 60, en appui sur la portée 62, le long de la tige 30 ; corollairement, l'aile 15 de l'étrier 13 se déplace plus à droite et entraîne, par la butée 75, la bague 72 vers la droite par rapport au support fixe 11.

Bien entendu, la bague 72 est déplacée d'une valeur égale à l'usure due uniquement au second patin de freinage 19, tandis que la bague d'arrêt 60 est déplacée d'une valeur égale à l'usure totale due aux deux patins de freinage 18 et 19.

Comme on le comprend aisément, au desserrage, le second patin 19 sera donc toujours à J1 du disque 10, défini par le jeu de la bague 72 dans la gorge du pion 73 : ainsi, J1 est constant, quelle que soit l'usure.

S'agissant du premier patin de freinage 18, il ne sera pas à distance constante du disque 10 mais à une distance J2 qui dépend du degré d'usure.

En effet, si l'usure est inférieure à la distance axiale qui sépare les dents 31 de la vis 30, ici le pas du filetage correspondant, la noix s'expansera radialement mais pas suffisamment pour passer une dent : J2 augmentera donc de cette valeur d'usure, inférieure audit pas.

Si l'usure est suffisante, la noix 40 sautera une dent et compensera d'une valeur égale audit pas le jeu dû à ladite usure.

On a décrit un frein à disque à étrier flottant mais, bien entendu, l'invention s'applique également à un frein à disque dans lequel un bloc de commande ménagé dans un support fixe est associé à chacun des patins de freinage, chaque bloc de commande comportant un dispositif de rattrapage ; bien entendu, dans ce cas, il n'y a pas de dispositif de recentrage tel que le dispositif 70.

Le frein à disque peut être équipé de capteurs de température, tels que les capteurs 66, figure 2 ; cette sécurité peut permettre d'être avisé d'une éventuelle défaillance du dispositif de rattrapage, l'un des patins pouvant être alors amené à lécher le disque 10 en permanence, en desserrage, ce qui élève sa température ; c'est le cas également, dans le cas d'un étrier flottant, lors d'une défaillance du ressort 64 et/ou du dispositif de recentrage 70.

Pour les mêmes raisons, par sécurité un indicateur de course de la pièce de commande 20 du piston 17 peut être prévu.

Pour renforcer la sécurité du frein qui vient d'être décrit, il est possible de prévoir, autour de la noix 40, un anneau élastique, dit de sécurité, retenant sans effort important les secteurs 41, 42, 43 en contact avec la vis 30 en cas de rupture du ou des joncs 45 ; l'anneau élastique de sécurité 76 est à bas niveau de contrainte en sorte qu'il est pratiquement incassable.

La tenue des secteurs 41, 42, 43 par l'anneau élastique de sécurité 76 est telle que la noix 40 peut transmettre l'effort de poussée des moyens élastiques 24, en association avec l'inclinaison des portées de butée axiale 32 et 33, mais, par contre, ne peut pas résister au recul dû au piston 20 ; dans ce dernier cas, le patin de freinage 18 pourra rester au contact du disque 10 dont l'échauffement sera détecté par des capteurs, tels que les capteurs 66.

## Revendications

1. Frein à disque, en particulier pour usage industriel, du genre composant, en association avec le disque (10) à freiner, au moins un patin de freinage (18, 19), un bloc de commande (14) constitué d'un cylindre (18) dans lequel est monté coulissant un piston (17) adapté, sous l'action de moyens de serrage constitués par des moyens élastiques (24), à appliquer le patin de freinage (18, 19) sur le disque (10) pour freinage de celui-ci, des moyens de desserrage (26) commandés étant prévus pour maintenir normalement le patin (18; 19) à distance du disque (10), le piston (17) étant en deux pièces, une première pièce dite de commande (20) et une seconde pièce dite d'application (21) destinée à coopérer directement avec le patin de freinage, (18), les deux pièces (20. 21) étant attelées l'une à l'autre par l'intermédiaire d'un dispositif de rattrapage (22) du jeu dû à l'usure du patin de freinage (18, 19) qui comprend une tige (30) munie de dents (31) périphériques coopérant avec des gorges (46) périphériques complémentaires ménagées à l'intérieur d'une noix (40) radialement élastique, la noix (40) étant attelée axialement à l'une (20) des deux pièces, de commande (20) ou d'application (21), et la tige (30) attelée axialement - à l'autre (21) des deux pièces, **caractérisé par le fait que** la noix (40) est constituée d'au moins deux secteurs (41, 42, 43) serrés élastiquement sur la tige (30), le serrage élastique étant obtenu par au moins un jonc élastique (45) entourant la noix (40).

2. Frein à disque selon la revendication 1, **caractérisé par le fait qu'**au jonc élastique (45) est associé un anneau élastique dit de sécurité (76) retenant les secteurs (41, 42, 43) en contact avec la tige (30) en sorte que la noix (40) peut transmettre l'effort des moyens élastiques (24) mais ne résiste pas au recul du piston (20).

3. Frein à disque selon l'une des revendications 1 ou 2, **caractérisé par le fait que** la noix (40) est disposée axialement entre deux portées (32, 33) de butée axiale que présente la pièce (20) à laquelle la noix (40) est attelée, lesdites portées de butée (32, 33) étant inclinées par rapport à l'axe (50) de la tige (30) et de la noix (40).

4. Frein à disque selon la revendication 3, **caractérisé par le fait que** lesdites portées (32, 33) sont inclinées d'un angle voisin de 15 degrés.

5. Frein à disque selon l'une des revendications 3 ou 4, **caractérisé par le fait que** les faces d'extrémités (48, 49) axiales de la noix (40), par laquelle ladite noix (40) coopère avec lesdites portées de butée axiale (32, 33), sont également inclinées par rapport à l'axe (50) de la tige (30), notamment d'un angle voisin de 15 degrés.

6. Frein à disque selon l'une des revendications 3 à 5, **caractérisé par le fait que** la tige (30) est attelée axialement à l'autre pièce (21) au moins dans le sens dit de serrage du frein grâce à un épaulement (53) transversal qu'elle présente.

7. Frein à disque selon l'une des revendications 3 à 5, **caractérisé par le fait que** la tige (30) est attelée axialement à l'autre pièce (21) au moins dans le sens dit de serrage par l'intermédiaire d'une portée sphérique (55).

8. Frein à disque selon la revendication 7, **caractérisé par le fait que** la concavité de la portée sphérique est tournée vers le disque.

9. Frein à disque selon la revendication 6, **caractérisé par le fait que** la tige (30) est attelée axialement dans les deux sens (56).

10. Frein à disque selon l'une des revendications 1 à 9. **caractérisé par le fait que** les dents (31) de la tige (30), et les gorges (46) de la noix (40), ont en coupe une forme dissymétrique, des flancs dits d'attaque (51) étant moins inclinés sur l'axe (50) que des flancs dits de retour (52).

11. Frein à disque selon la revendication 10. **caractérisé par le fait que** les flancs d'attaque (51) sont inclinés d'un angle de l'ordre de 2 degrés.

12. Frein à disque selon l'une des revendications 10 ou 11, **caractérisé par le fait que** les flancs de retour (52) sont inclinés d'un angle voisin de 45 degrés.

13. Frein à disque selon l'une des revendications 1 à 12, **caractérisé par le fait que** les dents (31) de la tige (30) et les gorges (46) de la noix (40) sont obtenues par filetage et taraudage, respectivement.

14. Frein à disque selon l'une des revendications 1 à 13, **caractérisé par le fait que** la noix (40) est attelée axialement à la pièce de commande (20) et la tige (30) à la pièce d'application (21).

15. Frein à disque selon la revendication 14, **caractérisé par le fait que** la tige (30) porte à serrage une bague (60) dite d'arrêt dont le débattement axial est limité dans les deux sens (61, 62) par rapport au cylindre (16) du bloc de commande (14).

16. Frein à disque selon l'une des revendications 1 à 15, **caractérisé par le fait que** le cylindre du bloc de commande est porté par un support fixe.

17. Frein à disque selon la revendication 16, dans lequel deux patins de freinage sont prévus, disposés de part et d'autre du disque, **caractérisé par le fait qu'**à chaque patin de freinage est associé un bloc de commande.

18. Frein à disque selon l'une des revendications 1 à 15, **caractérisé par le fait que** le bloc de commande (14) est porté par un étrier (13) chevauchant le disque (10) et monté flottant par rapport à un support fixe (11), l'étrier (13) étant adapté à appliquer un second patin de freinage (19) sur le disque (10) du côté opposé au cylindre de commande (16).

19. Frein à disque selon la revendication 18, **caractérisé par le fait qu'**un dispositif dit de recentrage (70) est prévu entre l'étrier (13) et le support fixe (11).

20. Frein à disque selon la revendication 19, **caractérisé par le fait que** le dispositif de recentrage (70) comprend une bague (72) montée à serrage dans un alésage (71) prévu dans l'une (11) des pièces support fixe (11) étrier (13), ladite bague (72) étant montée avec jeu axial entre deux butées (74, 75) solidaires de l'autre (13) pièce.

21. Frein à disque selon l'une des revendications 19 ou 20, **caractérisé par le fait qu'**un ressort (64) prenant appui sur le support fixe (11) sollicite l'étrier (13) dans le sens du desserrage du second patin de freinage (19).

## Claims

1. Disc brake, in particular for industrial use, of the type comprising, in association with the disc (10) to be braked, at least one brake pad (18, 19), a control unit (14) consisting of a cylinder (16) in which there is slidably mounted a piston (17) adapted, under the action of clamping means consisting of elastic means (24), to apply the brake pad (18, 19) to the disc (10) for braking thereof, controlled release means (26) being provided for normally holding the pad (18, 19) at a distance from the disc (10), the piston (17) being in two pieces, a first so-called control piece (20) and a second so-called application piece (21) intended to cooperate directly with the brake pad (18), the two pieces (20, 21) being coupled to each other by means of a device (22) for taking up the clearance due to the wear on the brake pad (18, 19) that comprises a rod (30) provided with peripheral teeth (31) cooperating with complementary peripheral grooves (46) provided inside a radially elastic nut (40), the nut (40) being coupled axially to one (20) of the two pieces, control (20) or application (21), and the rod (30) coupled axially to the other one (21) of the two pieces, **characterised by** the fact that the nut (40) consists of at least two sectors (41, 42, 43) elastically clamped on the rod (30), the elastic clamping being obtained by at least one elastic spring ring (45) surrounding the nut (40).

2. Disc brake according to Claim 1, **characterised by** the fact that with the elastic spring ring (45) there is associated a so-called safety elastic annulus (76) holding the sectors (41, 42, 43) in contact with the rod (30) so that the nut (40) can transmit the force of the elastic means (24) but does not resist the retraction of the piston (20).

3. Disc brake according to Claims 1 or 2, **characterised by** the fact that the nut (40) is disposed axially between two axial stop surfaces (32, 33) which the piece (20) to which the nut (40) is coupled has, the said stop surfaces (32, 33) being inclined with respect to the axis (50) of the rod (30) and nut (40).

4. Disc brake according to Claim 3, **characterised by** the fact that the said surfaces (32, 33) are inclined by an angle of around 15 degrees.

5. Disc brake according to one of Claims 3 or 4, **characterised by** the fact that the axial end faces (48, 49) of the nut (40), by means of which the said nut (40) cooperates with the said axial stop surfaces (32, 33), are also inclined with respect to the axis (50) of the rod (30), in particular by an angle of around 15 degrees.

6. Disc brake according to one of Claims 3 to 5, **characterised by** the fact that the rod (30) is axially coupled to the other piece (21) at least in the so-called brake clamping direction by virtue of a transverse shoulder (53) which it has.

7. Disc brake according to one of Claims 3 to 5, **characterised by** the fact that the rod (30) is axially coupled to the other piece (21) at least in the so-called clamping direction by means of a spherical surface (55).

8. Disc brake according to Claim 7, **characterised by** the fact that the concavity of the spherical surface is turned towards the disc.

9. Disc brake according to Claim 6, **characterised by** the fact that the rod (30) is coupled axially in both directions (56).

10. Disc brake according to one of Claims 1 to 9, **characterised by** the fact that the teeth (31) on the rod (30) and the grooves (46) on the nut (40) have in cross-section an asymmetric shape, so-called leading flanks (51) being less inclined to the axis (50) than so-called return flanks (52).

11. Disc brake according to Claim 10, **characterised by** the fact that the leading flanks (51) are inclined by an angle of around 2 degrees.

12. Disc brake according to one of Claims 10 or 11, **characterised by** the fact that the return flanks (52) are inclined by an angle of around 45 degrees.

13. Disc brake according to one of Claims 1 to 12, **characterised by** the fact that the teeth (31) on the rod (30) and the grooves (46) on the nut (40) are obtained by screwing and tapping respectively.

14. Disc brake according to one of Claims 1 to 13, **characterised by** the fact that the nut (40) is axially coupled to the control piece (20) and the rod (30) to the application piece (21).

15. Disc brake according to Claim 14, **characterised by** the fact that the rod (30) carries a so-called stop ring (60) tightly mounted thereon whose axial movement is limited in both directions (61, 62) with respect to the cylinder (16) of the control unit (14).

16. Disc brake according to one of Claims 1 to 15, **characterised by** the fact that the cylinder of the control unit is carried by a fixed support.

17. Disc brake according to Claim 16, in which two brake pads are provided, disposed respectively on each side of the disc, **characterised by** the fact that each brake pad is associated with a control unit.

18. Disc brake according to one of Claims 1 to 15, **characterised by** the fact that the control unit (14) is carried by a calliper (13) straddling the disc (10) and mounted floating with respect to a fixed support (11), the calliper (13) being adapted to apply a second brake pad (19) against the disc (10) on the opposite side to the control cylinder (16).

19. Disc brake according to Claim 18, **characterised by** the fact that a so-called recentring device (70) is provided between the calliper (13) and the fixed support (11) .

20. Disc brake according to Claim 19, **characterised by** the fact that the recentring device (70) comprises a ring (72) tightly mounted in a bore (71) provided in one (11) of the pieces consisting of fixed support (11) and calliper (13), the said ring (72) being mounted with axial clearance between two stops (74, 75) fixed to the other piece (13).

21. Disc brake according to one of Claims 19 or 20, **characterised by** the fact that a spring (64) bearing on the fixed support (11) forces the calliper (13) in the direction of unclamping of the second brake pad (19).

## Patentansprüche

1. Scheibenbremse, insbesondere für den industriellen Einsatz, von der Art, welche in Verbindung mit der Bremsscheibe (10) mindestens einen Bremsschuh (18, 19) und einen aus einem Zylinder (16) gebildeten Steuerblock (14) aufweist, in dem ein Kolben (17) gleitend angeordnet ist, der unter Einwirkung einer Spanneinrichtung aus elastischen Mitteln (24) dazu ausgelegt ist, den Bremsschuh (18, 19) gegen die Scheibe (10) zum Abbremsen derselben anzulegen, wobei angesteuerte Löseeinrichtungen (26) vorgesehen sind, um den Bremsschuh (18, 19) normalerweise mit Abstand zur Scheibe (10) zu halten, und wobei der Kolben (17) in zwei Teilen ausgeführt ist, ein erstes Teil, das so genannte Steuerteil (20), und ein zum direkten Zusammenwirken mit dem Bremsschuh (18) bestimmtes zweites Teil, das so genannte Anlegteil (21), wobei die beiden Teile (20, 21) unter Zwischenschaltung einer Einstellvorrichtung (22) zum Einstellen des auf den Abrieb des Bremsschuhs (18, 19) zurückzuführenden Spiels miteinander gekoppelt sind, welche eine mit Zähnen (31) auf ihrem Umfang versehene Stange (30) aufweist, die mit im Inneren einer in radialer Richtung elastischen Gewindemuffe (40) am Umfang komplementär ausgebildeten Vertiefungen (46) zusammenwirken, wobei die Gewindemuffe (40) mit einem (20) der beiden Teile, nämlich dem Steuerteil (20) oder dem Anlegteil (21), und die Stange (30) mit dem anderen (21) der beiden Teile in axialer Richtung gekoppelt ist, **dadurch gekennzeichnet, dass** die Gewindemuffe (40) aus mindestens zwei elastisch auf der Stange (30) aufgeklemmten Sektoren (41, 42, 43) gebildet ist, wobei die elastische Klemmung mittels mindestens eines elastischen Sicherungsteils (45) herbeigeführt wird, welches die Gewindemuffe (40) umschließt.

2. Scheibenbremse nach Anspruch 1, **dadurch gekennzeichnet, dass** mit dem elastischen Sicherungsteil (45) ein als Sicherungsring (76) bezeichneter elastischer Ring verbunden ist, welcher die Sektoren (41, 42, 43) in Kontakt mit der Stange (30) in der Weise hält, dass die Gewindemuffe (40) die Kraft der elastischen Mittel (24) übertragen kann, aber dem Rücklauf des Kolbens (20) keinen Widerstand entgegensetzt.

3. Scheibenbremse nach einem der Ansprüche 1 oder 2, **dadurch gekennzeichnet, dass** die Gewindemuffe (40) in axialer Richtung zwischen zwei axialen Anschlagflächen (32, 33) angeordnet ist, welche das Teil (20) aufweist, mit dem die Gewindemuffe (40) gekoppelt ist, wobei die Anschlagflächen (32, 33) gegenüber der Achse (50) der Stange (30) und der Gewindemuffe (40) geneigt sind.

4. Scheibenbremse nach Anspruch 3, **dadurch gekennzeichnet, dass** die Flächen (32, 33) um einen Winkel von etwa 15 Grad geneigt sind.

5. Scheibenbremse nach einem der Ansprüche 3 oder 4, **dadurch gekennzeichnet, dass** die axialen Endflächen (48, 49) der Gewindemuffe (40), mit denen die Gewindemuffe (40) mit den axialen Anschlagflächen (32, 33) zusammenwirkt, ebenfalls gegenüber der Achse (50) der Stange (30) geneigt sind, insbesondere um einen Winkel von etwa 15 Grad.

6. Scheibenbremse nach einem der Ansprüche 3 bis 5, **dadurch gekennzeichnet, dass** die Stange (30) mittels einer an ihr vorgesehenen, quer verlaufenden Schulter (53) in axialer Richtung an das andere Teil (21) zumindest in der als Bremsfeststellrichtung bezeichneten Richtung angelenkt ist.

7. Scheibenbremse nach einem der Ansprüche 3 bis 5, **dadurch gekennzeichnet, dass** die Stange (30) unter Zwischenschaltung einer Kugelfläche (55) in axialer Richtung an dem anderen Teil (21) zumindest in der als Bremsfeststellrichtung bezeichneten Richtung angelenkt ist.

8. Scheibenbremse nach Anspruch 7, **dadurch gekennzeichnet, dass** der konkave Bereich der Kugelfläche der Scheibe zugekehrt ist.

9. Scheibenbremse nach Anspruch 6, **dadurch gekennzeichnet, dass** die Stange (30) axial in beiden Richtungen (56) angekoppelt ist.

10. Scheibenbremse nach einem der Ansprüche 1 bis 9, **dadurch gekennzeichnet, dass** die Zähne (31) auf der Stange (30) und die Vertiefungen (46) in der Gewindemuffe (40) im Querschnitt eine unsymmetrische Form aufweisen, wobei als Angriffsflächen (51) bezeichneten Flanken weniger stark zur Achse (50) hin geneigt sind als als Rückstellflächen (52) bezeichneten Flanken.

11. Scheibenbremse nach Anspruch 10, **dadurch gekennzeichnet, dass** die Angriffsflächen (51) um einen Winkel in der Größenordnung von 2 Grad geneigt sind.

12. Scheibenbremse nach einem der Ansprüche 10 oder 11, **dadurch gekennzeichnet, dass** die Rückstellflächen (52) um einen Winkel von etwa 45 Grad geneigt sind.

13. Scheibenbremse nach einem der Ansprüche 1 bis 12, **dadurch gekennzeichnet, dass** die Zähne (31) auf der Stange (30) und die Vertiefungen (46) in der Gewindemuffe (40) jeweils durch Außengewindeschneiden bzw. Innengewindeschneiden erhalten werden.

14. Scheibenbremse nach einem der Ansprüche 1 bis 13, **dadurch gekennzeichnet, dass** die Gewindemuffe (40) mit dem Steuerteil (20) und die Stange (30) mit dem Anlegteil (21) in axialer Richtung gekoppelt ist.

15. Scheibenbremse nach Anspruch 14, **dadurch gekennzeichnet, dass** die Stange (30) einen an ihr festgeklemmten, als Haltering bezeichneten Ring (60) trägt, durch den die axiale Verschieblichkeit bezüglich des Zylinders (16) des Steuerblocks (14) in beide Richtungen (61, 62) begrenzt ist.

16. Scheibenbremse nach einem der Ansprüche 1 bis 15, **dadurch gekennzeichnet, dass** der Zylinder des Steuerblocks auf einem feststehenden Träger getragen wird.

17. Scheibenbremse nach Anspruch 16, bei welcher zwei Bremsschuhe vorgesehen sind, die zu beiden Seiten der Scheibe angeordnet sind, **dadurch gekennzeichnet, dass** jedem Bremsschuh ein Steuerblock zugeordnet ist.

18. Scheibenbremse nach einem der Ansprüche 1 bis 15, **dadurch gekennzeichnet, dass** der Steuerblock (14) von einem Bügel (13) getragen wird, welcher die Scheibe (10) übergreift und bezüglich eines feststehenden Trägers (11) schwimmend angebracht ist, wobei der Bügel (13) dazu ausgelegt ist, an der dem Steuerzylinder (16) gegenüberliegenden Seite gegen die Scheibe (10) einen zweiten Bremsschuh (19) anzulegen.

19. Scheibenbremse nach Anspruch 18, **dadurch gekennzeichnet, dass** eine Vorrichtung (70) zur erneuten Zentrierung zwischen dem Bügel (13) und dem feststehenden Träger (11) vorgesehen ist.

20. Scheibenbremse nach Anspruch 19, **dadurch gekennzeichnet, dass** die Vorrichtung (70) zum erneuten Zentrieren einen Ring (72) aufweist, welcher in einer Bohrung (71) eingespannt ist, die in einem (11) der Teile, nämlich dem feststehenden Träger (11) bzw. dem Bügel (13), vorgesehen ist, wobei der Ring (72) mit axialem Spiel zwischen zwei Anschlägen (74, 75) angebracht ist, die fest mit dem anderen Teil (13) verbunden sind.

21. Scheibenbremse nach einem der Ansprüche 19 oder 20, **dadurch gekennzeichnet, dass** eine sich auf dem feststehenden Träger (11) abstützende Feder (64) den Bügel (13) in die Löserichtung des zweiten Bremsschuhs (19) spannt.
